# EUROPEAN PATENT APPLICATION

(11) **EP 4 400 459 A1**
(43) Date of publication of application: **17.07.2024**
(21) Application number: 23165116.7
(22) Date of filing: 29.03.2023
(51) Int. Cl.: B65H 19/12, H01M 10/04

(54) **AUTOMATIC SUPPLY AND REPLACEMENT DEVICE OF ELECTRODE PLATE FOR MANUFACTURING SECONDARY BATTERY**

(30) Priority: 13.01.2023 KR 20230005081; 13.01.2023 KR 20230005084
(71) Applicant: Lee, Kye-seol, Seoul (KR)
(72) Inventor: LEE, Kye-seol, Seoul (KR)
(74) Representative: Wunderlich & Heim Patentanwälte PartG mbB

(57) **Abstract**

The present invention relates to an automatic supply and replacement device of an electrode plate for manufacturing a secondary battery, and particularly, to automatically performing all integrated operations of when a circular electrode plate is supplied while the circular electrode is moved to an electrode plate transfer unit along front and rear, and left and right guide rails and locations accurately coincide with each other while a rotary axis is rotated at 360 degrees in order to supply the circular electrode plate, moving the electrode plate transfer unit receiving the circular electrode plate from an electrode plate supply unit to an electrode manufacturing unit, and inserting the circular electrode plate into a left electrode and a right electrode, and replacing the circular electrode plate, and connecting the electrode to the end of the existing electrode, and then collecting an electrode end portion which remains after the user in a previous step and a bobbin of which using is completed, and discarding the electrode end portion to a predetermined place and simultaneously, returning the bobbin to an original position of a bobbin recovery port of an electrode plate supply unit again.

The electrode plate supply unit includes a rotary axis 2 installed at a lower portion to be rotatable at 360 degrees, a support unit 3 for supporting the rotary axis 2, a first guide rail 4 installed at a lower end of the support unit 3 and moving the electrode plate supply unit horizontally and a second guide rail 5 moving the electrode plate supply unit forward and backward, and the electrode plate replacement device includes an electrode plate transfer unit 2 receiving a circular electrode plate 7 from the electrode plate supply unit 1 and transferring the circular electrode plate 7 to an electrode manufacturing unit 3, and an electrode manufacturing unit 3 having a left electrode 5 and a right electrode 6, and replacing the electrode transferred by the electrode plate transfer unit 2 and manufacturing the electrode, and the electrode plate transfer unit 2 transfers the circular electrode plate 7 while being transferred along a vertical movement rail 9, and a first push stick and a first holder are provided are provided in the electrode plate supply unit 1 and a second push stick and a second holder are provide din the electrode plate transfer unit 2, and the electrode plate transfer unit 1 receiving the circular electrode plate 7 transfers the circular electrode plate 7 along a guide rail 4a and replaces the circular electrode plate 7.

## Description

### [Technical Field]

The present invention relates to an automatic supply and replacement device of an electrode plate for manufacturing a secondary battery, and particularly, to automatically performing all integrated operations of when a circular electrode plate is supplied while the circular electrode is moved to an electrode plate transfer unit along front and rear, and left and right guide rails and locations coincide with each other while a rotary axis is rotated at 360 degrees in order to supply the circular electrode plate, moving the electrode plate transfer unit receiving the circular electrode plate to an electrode manufacturing unit along the guide rail, and inserting the circular electrode plate into a left electrode and a right electrode, and replacing the circular electrode plate, and connecting the electrode to the end of the existing electrode, and then collecting an electrode end portion which remains after the user in a previous step and a bobbin of which using is completed, and discarding the electrode end portion to a predetermined place and simultaneously, returning the bobbin to an original position of a bobbin recovery port of an electrode plate supply unit again.

### [Background Art]

In general, a secondary battery is a battery that can be recharged, and is configured to repeat the charging and discharge by moving ions in an electrolyte between an anode and a cathode insulated by a separator. Electrodes such as the anode and the cathode of the secondary battery commonly include an electrode collector and an electrode material made of an electrode active material applied onto the electrode collector.

The electrode collector may be, for example, a sheet or a foil made of aluminum (Al) or copper (Cu). A region in which the electrode material is stacked on the electrode collector is referred to as a coated portion and a region in which the electrode material is not stacked and the electrode collector is exposed is referred to as an uncoated portion.

A secondary battery electrode is manufactured through a process of shearing a web of the secondary battery electrode in which the electrode material is stacked in the electrode collector, and forming an electrode tab and a notch in a width-direction end portion of the web, and cutting the web into unit electrodes constituting a battery cell.

Forming the electrode tab and the notch is referred to as trimming or notching processing.

In the related art, in general, the secondary battery electrode is trimming-processed by using a punching press or a laser cutter.

In a scheme of trimming the secondary battery electrode by using the punching press, since the web should be stopped when the secondary battery electrode is punched under the punching press, a trimming work productivity deteriorates and there is a problem in hat work noise is very large.

In the related art, an electrode plate replacing work is manually performed in order to replace the electrode of the electrode manufacturing unit, and as a result, there is a problem in that workability deteriorates and productivity decreases.

Further, in the related art, in order to supply the circular electrode plate is supplied to the electrode plate transfer unit, since the circular electrode plate is very heady, the circular electrode plate should be transferred by fixing the electrode plate to the electrode plate transfer unit, so there is a fault that is very uncomfortable to supply the electrode plate to the electrode plate transfer unit.

Further, in the related art, an electrode plate replacing work is manually performed in order to replace the electrode of the electrode manufacturing unit, and as a result, there is a problem in that workability deteriorates and productivity decreases.

### [Documents of Related Art]

### [Patent Documents]

Korean Patent Application No. 10-2022-0065993
Korean Patent Application No. 10-2017-0006066

### [Disclosure]

### [Technical Problem]

The present invention is to solve the conventional fault, and an object of the present invention is to include an electrode plate supply unit so as to supply an electrode plate to be rotatable at 360 degrees through a 4-axis rotary axis, and simultaneously include left and right, and front and rear guides rails, include two circular electrode plates on two axes so as to be upward to each other in the electrode plate supply unit and couple a bobbin to the other 2-axis, and automatically supply the electrode plate to an electrode plate transfer unit.

Another object of the present invention is to provide an automatic electrode plate replacement device for manufacturing a secondary battery, which senses a tape attached to an end of a circular electrode plate when transferring the circular electrode plate and connecting the circular electrode plate to the existing electrode of an electrode manufacturing unit, raises and holds a portion of the tape without an adhesive force by vacuum suction, and simultaneously blows air to the tape from a vertical direction by an air output unit and the tape to the electrode plate manufacturing unit by gripping the tape with a clip so as not to return the tape to the electrode again, and replaces the electrode, and recovers an electrode end portion which remains in the electrode plate manufacturing unit and discards the electrode end portion to a predetermined place while returning the electrode end portion to an original position, and recovers the bobbin of which using is completed and inserts the bobbin into a bobbin recovery port of the electrode plate supply unit with the clip.

### [Technical Solution]

In order to solve the problem, in the present invention, an electrode plate supply unit supplying an electrode plate includes a rotary axis installed at a lower portion to be rotatable at 360 degrees, a support unit supporting the rotary axis, a first guide rail installed at a lower end of the support unit and moving the entirety of the electrode plate supply unit horizontally, a second guide rail moving the entirety of the electrode plate supply unit forward and backward, a first holder at an upper end of the rotary axis and inserted with a core of the circular electrode plate, a first push stick pushing the circular electrode plate held on the holder, and the circular electrode plate held on the first holder.

In the present invention, the first push stick is installed at an outer periphery of the first holder and pushing and returning the circular electrode plate inserted into the first holder to an original position by a cylinder operation.

In the present invention, an automatic electrode plate replacement device includes an electrode plate transfer unit receiving a circular electrode plate from the electrode plate supply unit, a guide rail transferring the electrode plate transfer unit to an electrode replacement unit, and an electrode manufacturing unit replacing an electrode from the electrode plate transfer unit transferred along the guide rail and seamlessly manufacturing the electrode.

### [Advantageous Effects]

As described above in detail, according to the present invention as a means for automatically transferring a circular electrode plate, a rotary axis is installed to be rotatable at 360 degrees, and each of a 4-axis and a push stick are provided on the rotary axis, and the circular electrode plate is moved to left and right sides or front and rear sides along first and second guide rails to be automatically transmitted to an electrode plate transfer unit while the circular electrode plate is held on a holder and rotated at 360 degrees, and a bobbin of which using is completed can be brought from the electrode plate transfer unit and inserted into the holder of an electrode plate supply unit.

Further, according to the present invention, when the circular electrode plate is transferred by the electrode plate transfer unit, a sensor (or a barcode) recognizes a tape attached to the circular electrode plate and a portion of the tape without an adhesive force is adsorbed and detached from an electrode plate, and simultaneously, air is injected from a vertical direction, an electrode can be replaced by holding an electrode end with a clip.

Further, according to the present invention, the electrode is replaced, and then returned to an original position again, and an electrode end portion and a bobbin of which using is completed is recovered and the electrode end portion is discarded to a predetermined place, and the bobbin is inserted into a bobbin recovery port of the electrode plate supply unit to be used again.

### [Description of Drawings]

FIG. 1 is a perspective view illustrating an overall configuration of the present invention.
FIG. 2 is a perspective view of an electrode plate supply unit according to the present invention.
FIG. 3 is a perspective view illustrating an operation of transferring a circular electrode plate to an electrode plate transfer unit from an electrode plate supply unit.
FIG. 4 is a perspective view illustrating an operation of transferring the circular electrode plate to the electrode plate transfer unit according to the present invention.
FIG. 5 is a perspective view illustrating a state in which the circular electrode plate is transferred to the electrode plate transfer unit according to the present invention.
FIG. 6 is a perspective view illustrating a state in which the electrode plate transfer unit is transferred to a right electrode of an electrode manufacturing unit in order to replace an electrode plate according to the present invention.
FIGS. 7 and 8 are an exploded perspective view and a coupling perspective view of a vacuum adsorption unit and an air jetting unit according to the present invention.
FIG. 9 is a perspective view for describing a process of vacuum-adsorbing a tape end attached to an electrode and simultaneously preventing a tape from being returned to an original position by jetting air according to the present invention.
FIGS. 10 to 12 are diagrams illustrating an operation of holding and releasing the electrode with a clip and replacing the electrode with an existing electrode by recognizing and vacuum-adsorbing the tape of the electrode end according to the present invention.
FIGS. 13 and 14 are diagrams for describing an electrode replacing process according to the present invention.

### [Modes for the Invention]

Hereinafter, an embodiment of the present invention will be described below in detail with reference to the accompanying drawings.

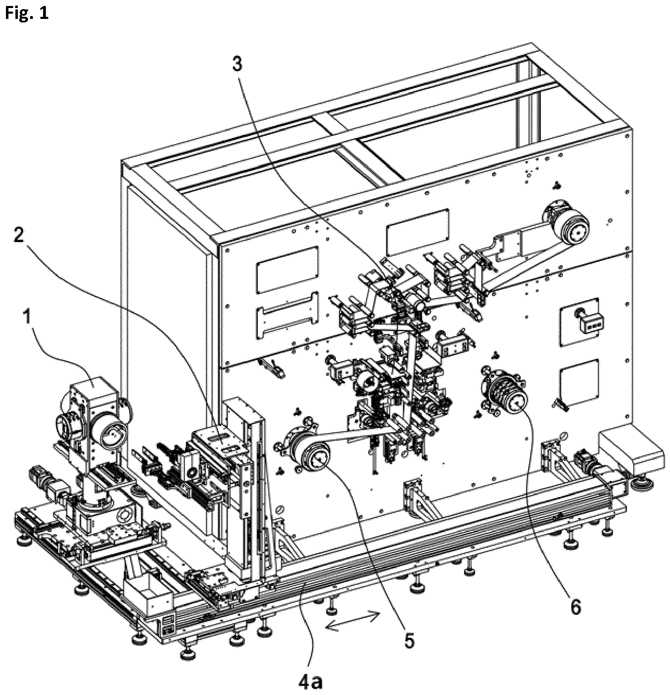

FIG. 1 is a perspective view of an overall electrode replacement device according to the present invention, and the electrode replacement device is constituted by an electrode plate supply unit 1 for supplying a circular electrode plate, an electrode plate transfer unit 2 receiving the circular electrode plate from the electrode plate supply unit 1 and transferring the circular electrode plate to an electrode manufacturing unit 3, the electrode manufacturing unit 3 having a left electrode 5 and a right electrode 6, and replacing an electrode transferred by the electrode plate transfer unit 2 and seamlessly manufacturing the electrode, and a guide rail 4a for reciprocatingly transferring the electrode plate transfer unit 2 to the electrode manufacturing unit 3.

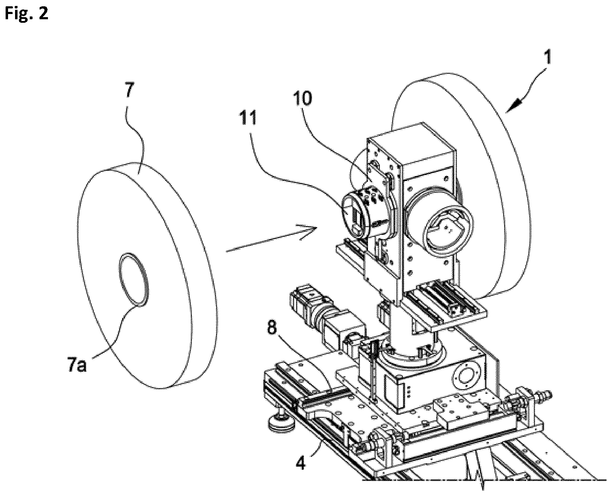

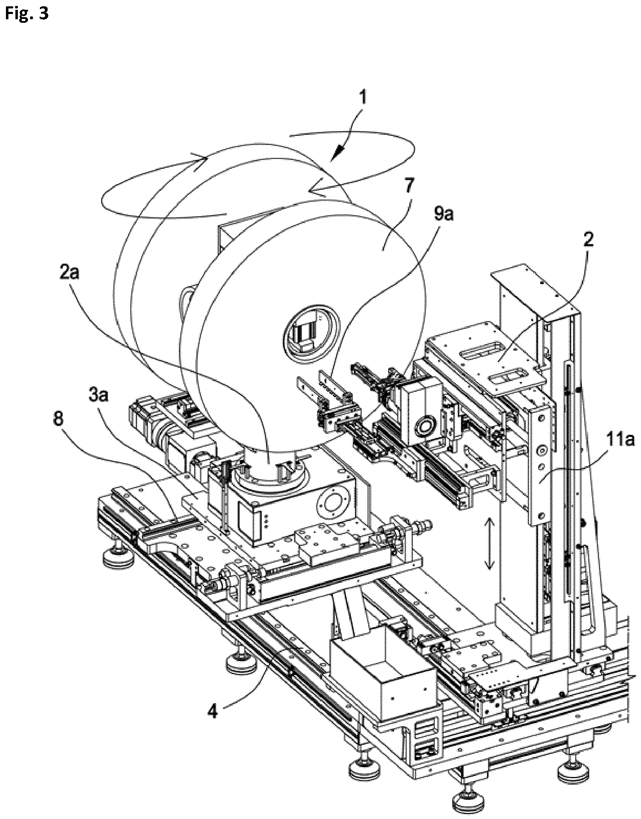

FIG. 2 is a perspective view of an electrode plate supply unit 1 according to the present invention and FIG. 3 is a perspective view illustrating an operation of transferring a circular electrode plate to an electrode plate transfer unit from an electrode plate supply unit 1, and in order to seamlessly supply the electrode to the electrode manufacturing unit 3, the electrode plate transfer unit 2 is configured to hold a circular electrode plate 7 in a first holder 11 by adjusting a height and a position while moving the circular electrode plate 7 having a core 7a along first and second guide rails 8 and 4 to front and rear sides or left and right sides.

The electrode plate supply unit 1 is constituted by a rotary axis 2a installed at a lower portion to be rotatable at 360 degrees, a support unit 3a for supporting the rotary axis 2a, a first guide rail 8 installed at a lower end of the support unit 3a and moving the entirety of the electrode plate supply unit 1 to the left and right sides, a second guide rail 4 moving the entirety of the electrode plate supply unit 1 to the front and rear sides, a first holder 11 installed at an upper end of the rotary axis 2a and supporting the circular electrode plate 7 when the circular electrode plate 7 is inserted, , a first push tick 10 pushing the circular electrode plate 7 held on the first holder 11, and the circular electrode plate 7 having a core 8a held in the holder 11, and in the drawing, an undescribed reference numeral 9a represents a clip for an empty bobbin into a bobbin recovery port and reference numeral 11a represents a clip vertical movement unit.

The first push stick 10 is installed at an outer periphery of the first holder 11 and configured to push and return the circular electrode plate 7 inserted into the first holder 11 to the original position.

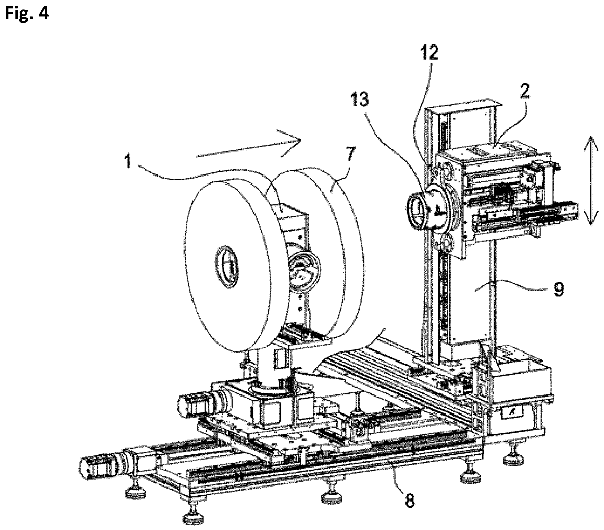

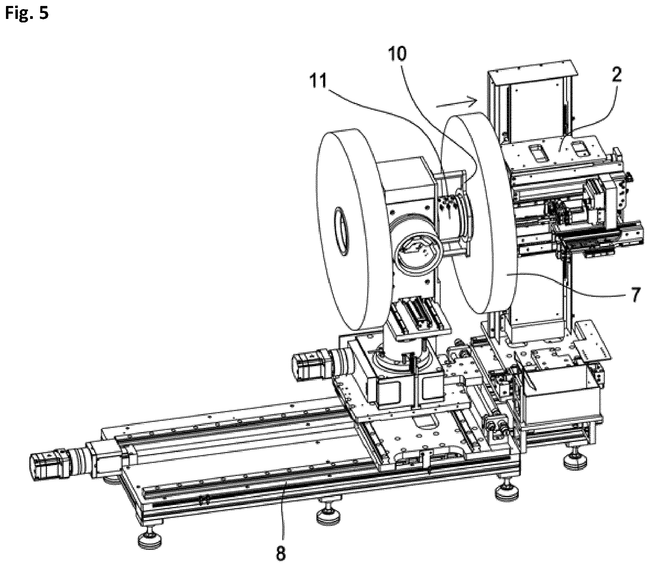

FIGS. 4 and 5 are perspective views illustrating an operation of transferring the circular electrode plate 7 to the electrode plate transfer unit 2 according to the present invention, and the electrode plate transfer unit 2 is configured to receive and transfer the circular electrode plate 7 while the electrode plate transfer unit 2 moves along a vertical movement rail 9 vertically, and the second push stick 12 and the second holder 13 are provided in the electrode plate transfer unit 2.

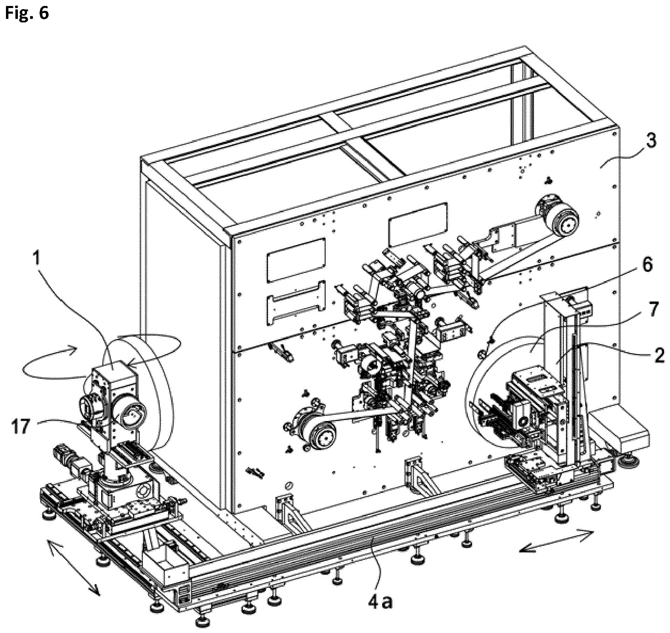

FIG. 6 is a perspective view illustrating a state in which the electrode plate transfer unit is transferred to a right electrode of an electrode manufacturing unit in order to replace an electrode plate according to the present invention, and the electrode plate transfer unit 2 receiving the circular electrode plate 7 is transferred along the guide rail 4a to replace the electrode in the left electrode 5 or the right electrode 6.

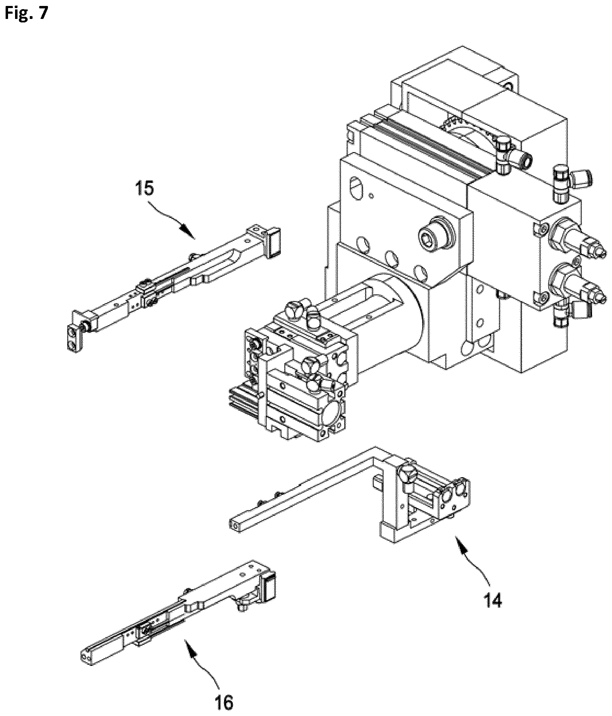

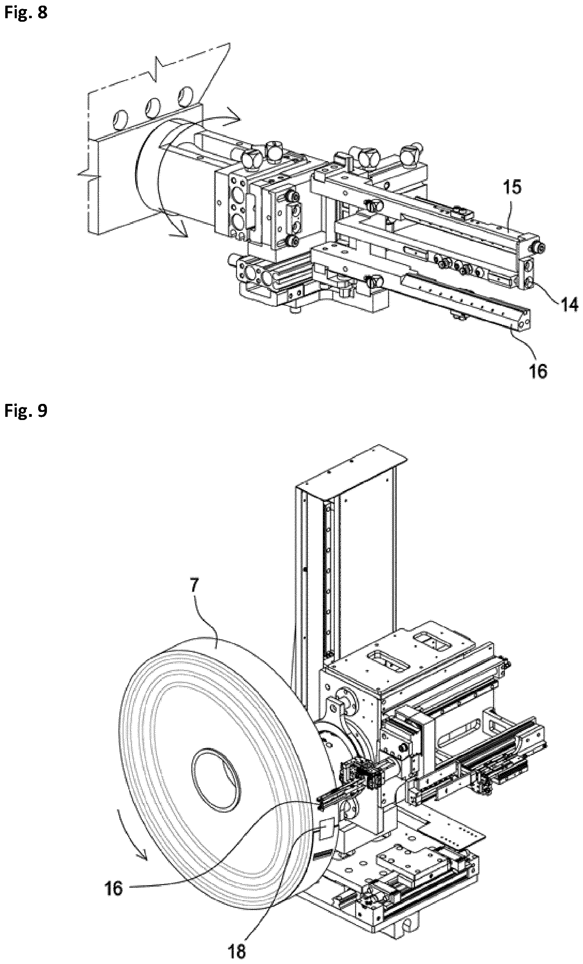

FIGS. 7 and 8 are an exploded perspective view and a coupling perspective view of an air adsorption unit 14 according to the present invention, and an upper clip 15 and a lower clip 16 having multiple air holes are installed at upper and lower portions of the vacuum adsorption unit 14.

FIG. 9 is a perspective view for describing a process of vacuum-adsorbing a tape end attached to an electrode and simultaneously preventing a tape from being returned to an original position by jetting air according to the present invention, and while a tape 18 of the circular electrode plate 7 is recognized and a port of a tape end without an adhesive force is vacuum-adsorbed and simultaneously the tape 18 is not returned while a wind is jetted through holes of the upper and lower clips 15 and 16, the electrode end is configured to be held and withdrawn by the upper and lower clips 15 and 16.

However, as a means for recognizing the tape end, a barcode is printed on the tape, and the tape end may be configured to be recognized through a barcode recognizer.

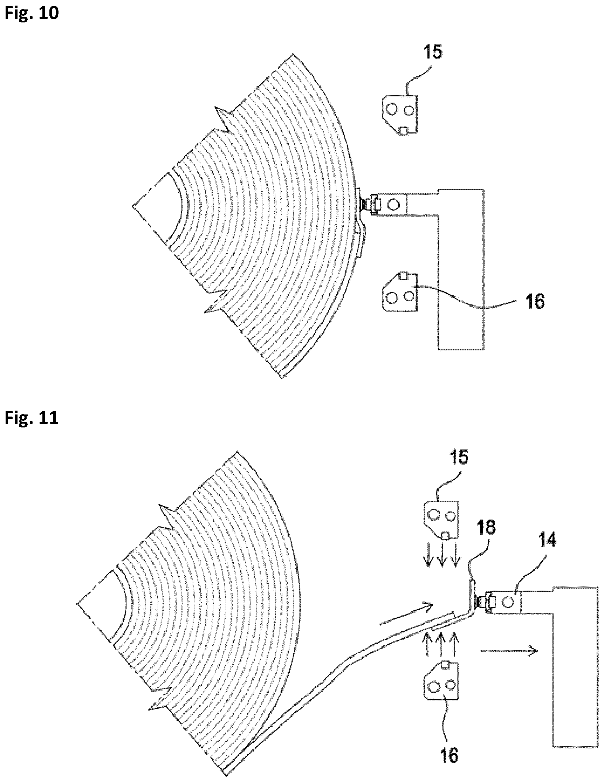

FIGS. 10 to 12 are diagrams illustrating an operation of holding and withdrawing the electrode with a clip and replacing the electrode with an existing electrode by recognizing and vacuum-adsorbing the tape of the electrode end according to the present invention.

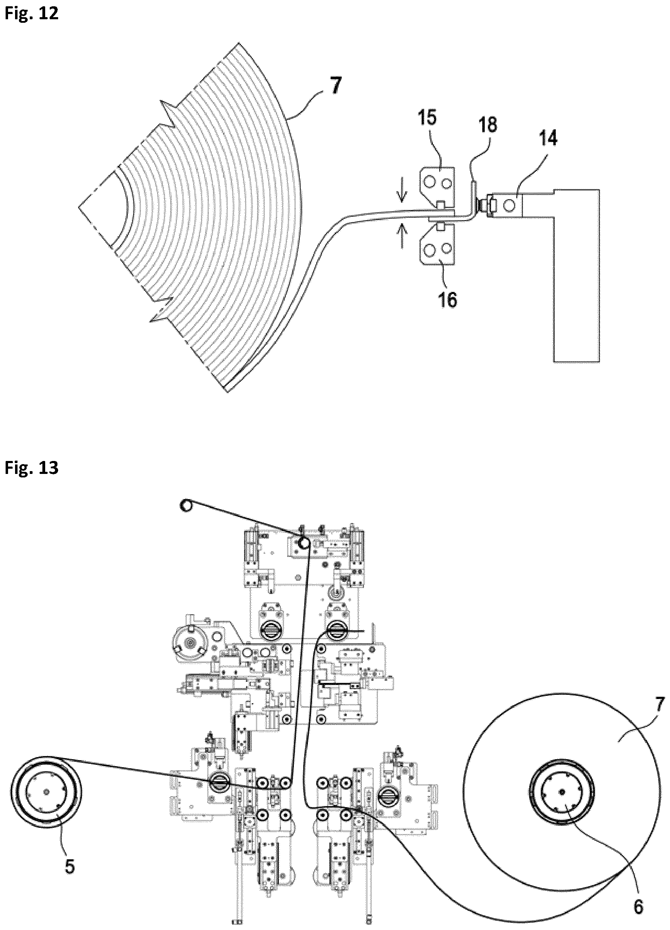

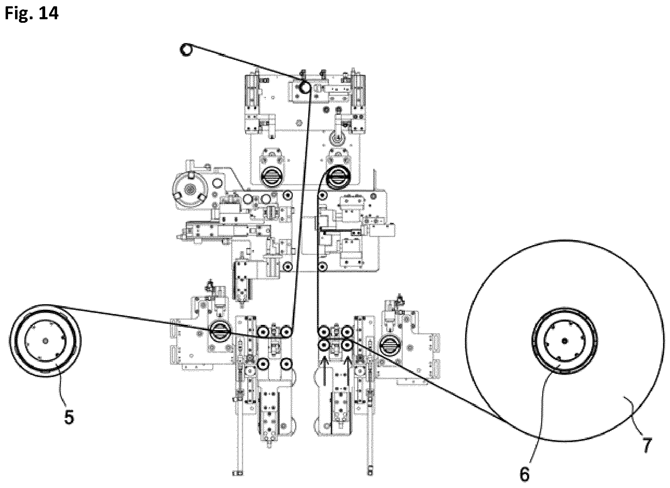

FIGS. 13 and 14 are diagrams for describing an electrode replacing process according to the present invention, and this is performed by a general operation, and a description thereof is omitted.

An action of the present invention configured as such will be described.

In the present invention, the rotary axis 2a is installed in the support unit 3a to be rotatable at 360 degrees, so the rotary axis 2a is configured to rotate 360 degrees by the control of the control unit, and the 4-axis first holder 11 is held on the rotary axis 2a to hold the circular electrode plate 7 on the first holder 11.

That is a pair of circular electrode plates 7 may be held on the first holder 11 to be upward to each other among four axes as in the drawing, and in this case, the first holder 11 is inserted and held on the corer 8a formed at the center of the circular electrode plate 7.

When the electrode plate is held on the electrode plate supply unit 1 as described above, the rotary axis 2a is freely rotatable at 360 degrees while the electrode plate is held, so for example, when the electrode plate transfer unit 2 is transferred as in FIG. 2, the rotary axis 2a of the electrode plate supply unit 1 rotates to move the circular electrode plate 7 to the electrode plate transfer unit 2 along the second guide rail 4.

Further, when the electrode plate transfer unit 2 moves and stops on a front surface of the electrode plate supply unit 1, the first holder 11 is adjusted to be accurately located on the core 8a of the circular electrode plate 7 while the electrode plate transfer unit 2 moves vertically by the vertical movement unit 11a, and in this case, the first holder 11 is positionable horizontally by the first guide rail 8.

Therefore, the electrode plate supply unit 1 moves along the second guide rail 4 while the first holder 11 of the electrode plate transfer unit 2 coincides with the corer 8a of the circular electrode plate 7 of the electrode plate supply unit 1, so the first holder 11 is inserted into the core 8a of the circular electrode plate 7, and in this case, the first push stick 10 pushes the circular electrode plate 7 fixed to the bobbin of the electrode plate supply unit 1 to the electrode plate transfer unit 2 and inserted into the second holder 13 to fix the circular electrode plate 7 to the electrode plate transfer unit 2.

When the circular electrode plate 7 is transferred to the electrode plate transfer unit 2, the electrode plate supply unit 1 moves backward along the second guide rail 4 and is returned to the original position.

When the circular electrode plate 7 is inserted and fixed into the electrode plate transfer unit 2, the electrode plate transfer unit 2 is transferred upward through the vertical movement rail 9, and subsequently transferred to the right side along the guide rail 4a to be stopped at an accurate location for electrode replacement at the right electrode 6 or the left electrode 5.

Then, the second push stock 12 pushes the circular electrode plate 7 held on the second holder 13 of the electrode plate transfer unit 2 to for example, the right electrode 6 of the electrode manufacturing unit 3 to transfer the circular electrode plate 7 from the electrode plate transfer unit 2 to the right electrode 6.

Therefore, when the circular electrode plate 7 is inserted into the right electrode 6, the right electrode 6 is rotated by motor rotation, and in this case, the tape 18 is bonded to the end of the circular electrode plate 7, so when the tape reaches a predetermined location, and this is recognized by the barcode, and as a result, the vacuum adsorption unit 14 adsorbs the tape 18.

In this case, the tape 18 has the adhesive force, and there are a portion of the tape which is bonded to the circular electrode plate 7 and a portion without the adhesive force, and the vacuum adsorption unit 14 adsorbs the portion having no adhesive force and simultaneously the wind is jetted from multiple holes formed in the upper and lower clips 15 and 16 positioned at upper and lower portions and an adsorption state is maintained as it is so that the tape 18 is not returned to the original position, and the upper and lower clips 15 and 16 holds the electrode end portion of the circular electrode plate 7, which is withdrawn as it is.

While the circular electrode plate is held on a machine through a roller of the electrode manufacturing unit 3 by holding the end of the tape 18 as in FIGS. 11 and 12, the circular electrode plate is connected to the existing electrode end to seamlessly manufacture the electrode.

Meanwhile, after the electrode replacement is completed as described above, the electrode plate transfer unit 2 moves along the guide rail 4a again as described above, and in this case, the upper and lower clips 15 and 16 collects an electrode end portion which remains after the use and the bobbin of which using is completed, and discards the electrode end portion to a predetermined place, and simultaneously returns the bobbin to the bobbin recovery port of the electrode plate supply unit 1 to the original position, and in this case, the bobbin inserted into the second holder 13 is pushed by the second push stick 12 and inserted into the bobbin recovery port 17 of the electrode plate supply unit 1 and recovered.

That is, when the bobbin of which using is completed is brought, the clip 9a holds the bobbin while vertical and horizontal heights are adjusted by the clip vertical movement unit 11a and pushed and inserted into the first holder 11 of the electrode plate supply unit 1 by the second push stick 12.

The present invention has a feature that all processes in which the electrode plate transfer unit 2 receives the circular electrode plate 7 supplied from the electrode plate supply unit 1 and moves the circular electrode plate 7 to the left electrode 5 or the right electrode 6 to be replaced through the guide rail 4a and replaces the circular electrode plate 7, and then vacuum-adsorbs the tape 8 of the end of the circular electrode plate 7 while the circular electrode plate 7, and simultaneously, withdraws the electrode with the upper and lower clips 5 and 6 and connects the electrode to the existing electrode end of the electrode manufacturing unit 34 to seamlessly manufacture the electrode may be automatically conducted.

As described above, the present invention is not limited to the above embodiments, and those skilled in the art to which the present invention belongs can usefully apply the present invention through various embodiments, of course.

### [Explanation of Reference Numerals and Symbols]

1: Electrode plate supply unit
2: Electrode plate transfer unit
2a: Rotary axis
3: Electrode manufacturing unit
3a: Support unit
4: Second guide rail
5: Left electrode
6: Right electrode
7: Circular electrode plate
8: First guide rail
8a: Core
9: Vertical movement rail
9a: Clip
10: First push stick
11: First holder
11a: Clip vertical movement unit
12: Second push stick
13: Second holder
14: Vacuum adsorption unit
15: Upper clip
16: Lower clip
17: Bobbin recovery port
18: Tape

## Claims

1. An electrode replacement device for manufacturing a secondary battery, comprising:
an electrode plate supply unit for supplying a circular electrode plate to an electrode plate transfer unit,
wherein the electrode plate supply unit includes a rotary axis installed at a lower portion to be rotatable at 360 degrees, a support unit supporting the rotary axis, a first guide rail installed at a lower end of the support unit and moving the entirety of the electrode plate supply unit horizontally, a second guide rail moving the entirety of the electrode plate supply unit forward and backward, a first holder at an upper end of the rotary axis and inserted with a core of the circular electrode plate, a first push stick pushing the circular electrode plate held on the holder, and the circular electrode plate held on the first holder.

2. The electrode replacement device for manufacturing a secondary battery of claim 1, wherein the first push stick is installed at an outer periphery of the first holder and pushing and returning the circular electrode plate inserted into the first holder to an original position by a cylinder operation.

3. An electrode replacement device for manufacturing a secondary battery, comprising:
an electrode plate transfer unit receiving a circular electrode plate from an electrode plate supply unit and transferring the circular electrode plate to an electrode manufacturing unit; and
an electrode manufacturing unit having a left electrode and a right electrode, and replacing an electrode transferred by the electrode plate transfer unit and seamlessly manufacturing the electrode,
wherein the electrode plate transfer unit receives and transfers the circular electrode plate while being vertically transferred along a vertical transfer rail, and includes a second push stick and a second holder, and the electrode plate transfer unit receiving the circular electrode plate transfers the electrode along a guide rail, and replaces the electrode at the left electrode or right electrode.

4. The electrode replacement device for manufacturing a secondary battery of claim 3, wherein the electrode plate transfer unit includes a vacuum adsorption unit vacuum-adsorbing a portion of a tape attached to an electrode end portion of the circular electrode plate without an adhesive force, and
the vacuum adsorption unit vacuum-adsorbs the tape and simultaneously holds and withdraws the electrode by upper and lower clips.

5. The electrode replacement device for manufacturing a secondary battery of claim 4, wherein the upper and lower clips have multiple air holes formed at upper and lower portions at a predetermined interval and simultaneously jet air simultaneously at the upper and lower portions and hold and withdraw the electrode while maintaining an adsorption state so that the vacuum-adsorbed tape is not returned to an original position.

6. The electrode replacement device for manufacturing a secondary battery of claim 3, wherein the electrode plate transfer unit recovers the electrode end portion and a bobbin of which using is completed while horizontally moving along the guide rail after replacing the electrode plate, and discharges the electrode end portion to a predetermined place, and recovers the bobbin to a bobbin recovery port of the electrode plate supply unit through clips of which height are adjusted vertically.
